# EUROPEAN PATENT SPECIFICATION

(11) **EP 4 549 795 B1**
(45) Date of publication and mention of the grant of the patent: **25.11.2026**
(21) Application number: 25164620.4
(22) Date of filing: 26.10.2021
(51) Int. Cl.: F16L 23/10

(54) **COUPLING HAVING ROTATION LIMITED SEGMENTS**
KUPPLUNG MIT ROTATIONSBEGRENZTEN SEGMENTEN
ACCOUPLEMENT À SEGMENTS LIMITÉS EN ROTATION

(30) Priority: 06.11.2020 US 202063110433 P
(43) Date of publication of application: 07.05.2025
(62) Document number(s) of the earlier application(s) in accordance with Art. 76 EPC: 21889846.8 / 4 241 007
(73) Proprietor: Victaulic Company, Easton, PA 18040-6714 (US)
(72) Inventor: Bowman, Matthew, A., Palmer, PA 18045 (US); Nunnally, Thomas, Telford, PA 18969 (US)
(74) Representative: Meissner Bolte Partnerschaft mbB

(56) References cited:
- DE-U1- 202016 000 436
- US-A1- 2003 178 850
- US-A1- 2013 125 373

## Description

This application is based upon and claims benefit of priority to US Provisional Application No. 63/110,433, filed November 6, 2020.

### Field of the Invention

This invention relates to mechanical couplings for joining pipe elements.

### Background

It is advantageous to use angularly oriented interface surfaces between the segments of a mechanical coupling for grooved pipe to cause the segments to rotate relatively to one another such that the "keys" of the coupling lock into the circumferential grooves of the pipe elements and form a more rigid joint in bending and torsion between them. US Patent No. 4,639,020 to Rung et al. discloses an example of such a coupling.

While very effective at creating more rigid joints, such prior art couplings may present challenges during installation, for example, in ease of assembly and the lack of consistent and identical visual indication that a coupling is properly installed in all intended conditions. There is clearly an opportunity to improve such mechanical couplings so they are easier to assemble and provide consistent and unambiguous visual indication confirming proper installation.

DE 20 2016 000436 U1 discloses a pipe coupling having two identical shells. Each shell has a curved surface, at each of which a flange being formed. A V-shaped tongue is formed in the flange of one shell and a V-shaped groove is formed in the flange of the other shell. The V-shaped tongue and the V-shaped groove are cross-sectionally matched to one another.

US 2013/125373 A1 relates to a coupling for joining pipe elements, the coupling having segments joined end to end. Each segment has projections with surface portions oriented angularly with respect to other surface portions to serve as a guide for the insertion of pipe elements between the segments when arranged in spaced apart relation around a ring gasket.

US 2003/178850 A1 relates to a coupling for axially joining pipe ends together is disclosed. The coupling is divided into a pair of coupling portions which clamp around the pipe ends opposite one another. Each coupling portion has a pair of keys which engage circumferential grooves in the surfaces of the pipe ends. Each coupling portion has a free end with a V-shaped tongue extending therefrom and an opposite free end with a V-shaped recess.

### Summary

The present invention is defined by independent claim 1 as appended. Further preferable embodiments are given in the dependent claims.

### Brief Description of the Drawings

Figure 1 is an isometric view of an example mechanical coupling according to the invention shown in a factory assembled state;
Figure 2 is an end view of the coupling shown in Figure 1;
Figures 3 and 4 show end views of the example coupling during installation;
Figure 5 is an isometric view of another example mechanical coupling, which is not part of the claimed invention, shown in a factory assembled state;
Figure 6 is an end view of the coupling shown in Figure 5;
Figures 7 and 8 show end views of the example coupling during installation; and
Figure 9 is a front view of another example embodiment of a coupling, which is not part of the claimed invention.

### Detailed Description

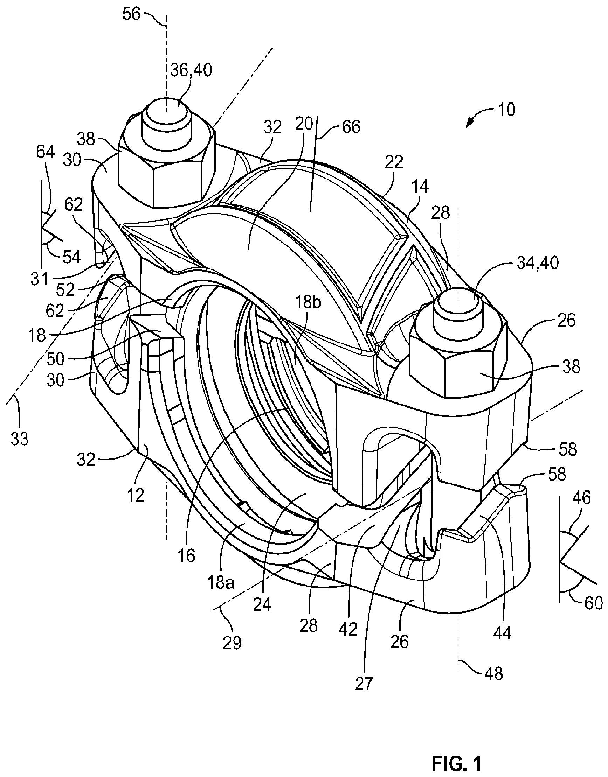

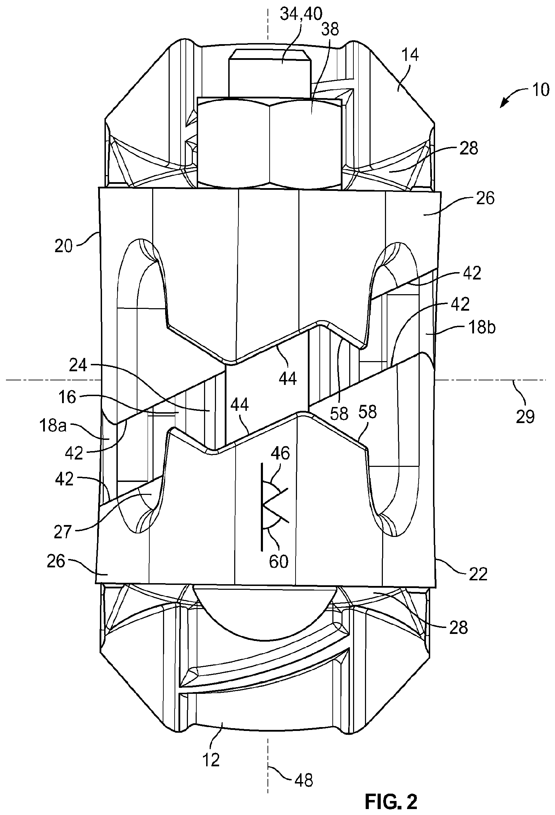

Figure 1 shows an example coupling 10 according to the invention for joining pipe elements (not shown) in end to end relation. In this example the coupling 10 comprises a first segment 12 and a second segment 14. Segments 12 and 14 are attached to one another end to end to surround and define a central space 16 for receiving the pipe elements. Coupling 10 is designed to join pipe elements having circumferential grooves at an end and thus each of the segments 12 and 14 comprises first and second arcuate projections 18a and 18b (see also Figure 2), also known as "keys", positioned on opposite sides 20 and 22 of the segments 12 and 14. The arcuate projections 18a and 18b face the central space 16 and are engageable within circumferential grooves in the pipe elements when the segments are drawn toward one another to form a joint. A seal 24 is positioned within the central space 16. Seal 24 is advantageously a ring gasket made of an elastomer such as EPDM, and may support the segments 12 and 14 in spaced apart relation as shown, at a distance sufficient to permit insertion of the pipe elements into the central space 16 without disassembling the coupling 10. Couplings according to the invention may also be used with plain end pipe, shouldered pipe or other formed pipe ends known in the art.

As further shown in Figure 1, each segment 12, 14 comprises a first lug 26 extending from first ends 28 thereof. A second lug 30 extends from a second end 32 of each segment. The first and second lugs 26 and 30 of the first segment 12 align respectively with the first and second lugs 26 and 30 of the second segment 14. A first adjustable fastener 34 extends between the first lugs 26 of each segment 12 and 14, and a second adjustable fastener 36 extends between the second lugs 30 of each segment. In this example the first and second adjustable fasteners 34 and 36 comprise a nut 38 and bolt 40.

Each segment 12 and 14 further comprises a first action surface 42 positioned between the central space 16 and the first lug 26. A first support surface 44 is positioned on the first lug 26 of each segment 12 and 14. The first fastener 34 is positioned between the first action surfaces 42 and the first support surfaces 44 of the segments 12 and 14. As shown in Figures 1 and 2, the first action surfaces 42 and the first support surfaces 44 are oriented at a first angle 46 transverse to a longitudinal axis 48 of the first fastener 34. The first angle 46 may have a slope ranging from 45° to 70°, with a slope of 60° considered advantageous. As shown in Figure 1, a second action surface 50 is positioned between the central space 16 and the second lug 30 on each segment 12 and 14. A second support surface 52 is positioned on the second lugs 30 of each of the segments 12 and 14. The second fastener 36 is positioned between the second action surfaces 50 and the second support surfaces 52 of the segments 12 and 14. The second action surfaces 50 and the second support surfaces 52 are oriented at a second angle 54 transverse to a longitudinal axis 56 of the second fastener 36. The second angles 54 of the second action surfaces 50 and the second support surfaces 52 have an opposite slope from the first angle 46 of the first action surfaces 42 and the first support surfaces 44. It is advantageous if the slopes of the first and second angles 46 and 54 are also equal in magnitude as well as opposite in sign. Although, in the embodiments disclosed in this specification, the first and second action surfaces 42 and 50 have the same angular orientations as the first and second support surfaces 44 and 52 respectively, a practical design may also advantageously have action surfaces with orientation angles which differ from the orientation angles of their adjacent associated support surfaces.

At least a first stop surface 58 is positioned on the first lugs 26 of each segment 12 and 14 adjacent to the first support surfaces 44. The first stop surfaces 58 are oriented at a third angle 60 (see Figure 1) having a slope opposite to the slope of the first angle 46. At least a second stop surface 62 is positioned on the second lugs 30 of each segment 12, 14 adjacent to the second support surfaces 52. The second stop surfaces 62 are oriented at a fourth angle 64 having a slope opposite to the second angle 54.

Advantageously, the first lugs 26 may define a first opening 27 surrounding a first axis 29 oriented perpendicularly to the longitudinal axis 48 of the first fastener 34 and positioned between the first action surfaces 42 and the first support surfaces 44. In a practical embodiment, the first opening 27 extends through the first lugs 26. The bending stiffness of the first lugs 26 may be tuned to a desired value by properly sizing the first opening 27. Similarly, the second lugs 30 may define a second opening 31 surrounding a second axis 33 oriented perpendicularly to the longitudinal axis 56 of the second fastener 36 and positioned between the second action surfaces 50 and the second support surfaces 52. In a practical embodiment, the second opening 31 extends through the second lugs 30. The bending stiffness of the second lugs 30 may be tuned to a desired value by properly sizing the second opening 31.

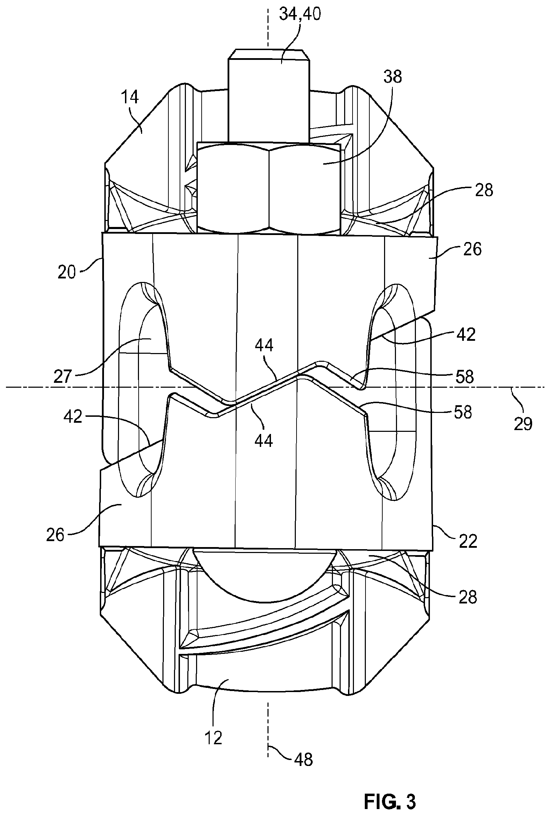

Operation of coupling 10 is described with reference to Figures 1-4. Figures 1 and 2 show the example coupling 10 in the factory assembled configuration with segments 12 and 14 supported in spaced apart relation on seal 24 at a distance from one another sufficient to permit pipe elements (not shown) to be inserted into the central space 16. In this factory assembled example fasteners 34 and 36 have been tightened sufficiently to hold the segments against the seal. The pipe elements are inserted into central space 16 and their circumferential grooves are aligned with the arcuate projections 18a and 18b on opposite sides 20 and 22 of the segments 12 and 14. Fasteners 34 and 36 are then further tightened to draw segments 12 and 14 toward one another. Figure 3 shows the point when the first and second action surfaces 42 and 50 on segments 12 and 14 engage one another (42 shown). Advantageously, support surfaces 44 and 52 on each segment engage at approximately the same time (44 shown). Arcuate projections 18a and 18b (not visible in the figure) are also engaged within the grooves of the pipe elements at this point as well. During correct installation of coupling 10, engagement of the support surfaces 44 and 52 between the segments 12 and 14 provide a first visual indication confirming that correct installation is proceeding.

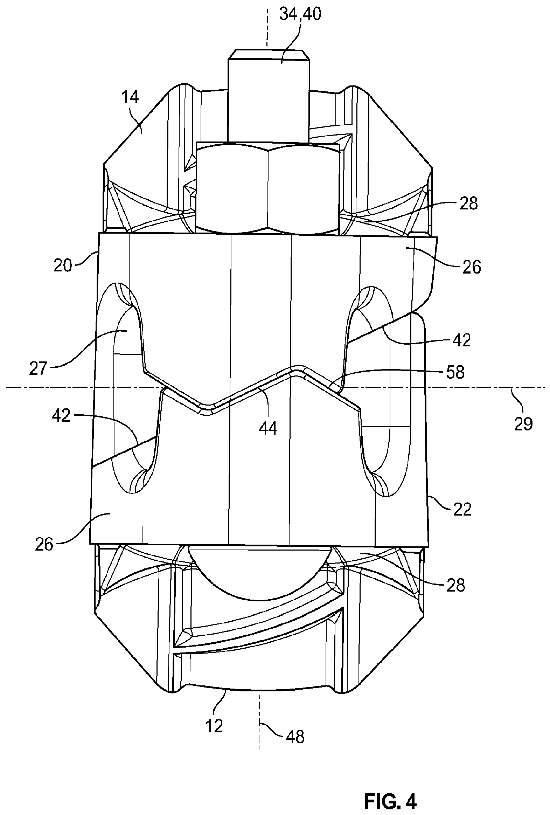

The angular orientation and opposite slopes of the action surfaces 42 and 50 and the support surfaces 44 on the first end 28 of the segments and support surfaces 52 on the second end 30 cause the segments 12 and 14 to rotate in opposite directions relatively to one another as fasteners 34 and 36 are further tightened. Figure 1 illustrates the axis of rotation 66 of the segments as the pair of action surfaces 42 and the pair of action surfaces 50 on each segment engage one another. The object of this rotation is to force the arcuate projections 18a and 18b to securely contact the sidewalls and/or the floors of the circumferential grooves of the pipe elements which they engage and thereby increase the rigidity of the joint in bending, axial loading, and torsion. Note, however, that the action surfaces 42 and 50 have no feature which limits the degree of relative rotation between the segments 12 and 14 as the fasteners are tightened. A feature which limits the relative rotation between the segments 12 and 14 is provided by the respective stop surfaces 58 and 62 on the lugs 26 and 30. As shown in Figure 4, these stop surfaces (58 shown) engage as the fasteners are further tightened. The geometry of the action surfaces 42 and 50, the support surfaces 44 and 52, and the stop surfaces 58 and 62, their lengths, positions on the segments and orientation angles are coordinated with the arcuate projections 18a and 18b such that the projections lock up effectively within the circumferential grooves of the pipe elements when the first stop surfaces 58 and the second stop surfaces 62 respectively engage, or nearly engage as depicted in Figure 4. Thus engagement of both stop surfaces 58 and 62 on opposite ends of the segments 12 and 14 provides visual confirmation that the coupling 10 has been properly installed. The stop surface 58 and 62 provide this confirmation over the entire tolerance range imposed on the circumferential grooves in the pipe elements. At one end of the groove tolerance range the segments 12 and 14 rotate about axis 66 to the limit imposed by respective engagement between the first stop surfaces 58 and the second stop surfaces 62. At the other end of the groove tolerance range engagement between one or both projections 18a and 18b and their respective circumferential grooves impose the limit on segment rotation. It is conceivable that when engagement between the projections 18a and 18b and the grooves limits segment relative rotation that one or both of the first and second stop surfaces 58 and 62 will not be engaged. However, the lugs 26 and 30 at opposite ends of the segments 12 and 14 are designed to deform when fasteners 34 and 36 are tightened once the rotational limit imposed by engagement between the projections 18a and 18b and their circumferential grooves is reached to permit the stop surfaces 58 and 62 to engage. The deformation is controlled in part by the size of the openings 27 and 29 which extend through the lugs 26 and 30. Thus, regardless of where the circumferential grooves in the pipe elements fall on the tolerance spectrum the technician needs merely to tighten the fasteners 34 and 36 until the stop surfaces 58 and 62 on respective lugs 26 and 30 at respective opposite ends 28 and 32 of segments 12 and 14 engage. This engagement provides a final visual confirmation that the coupling 10 has been properly installed.

In addition to being readily visually inspected to confirm a proper joint, couplings 10 according to the invention are also relatively insensitive to the installation procedure, affording greater ease of assembly. While a preferred installation practice is to partially tighten each fastener in a series of alternating steps, this practice may not always be followed. Instead, a technician may apply a powered impact wrench and fully tighten one fastener and then the other. However, with couplings 10 according to the invention this practice does not result in over-rotation of the coupling segments, which is prevented by engagement of the stop surfaces on the side of the one fastener which is first tightened. The technician may then apply torque to tighten the other fastener to bring the stop surfaces on the opposite end of the coupling into engagement to complete the installation. The geometry of the couplings is such that as long as both sets of stop surfaces 58 and 62 are in contact, the projections 18a and 18b will be securely engaged within their respective circumferential grooves, in contact with the groove sidewalls and/or floors to form a rigid joint.

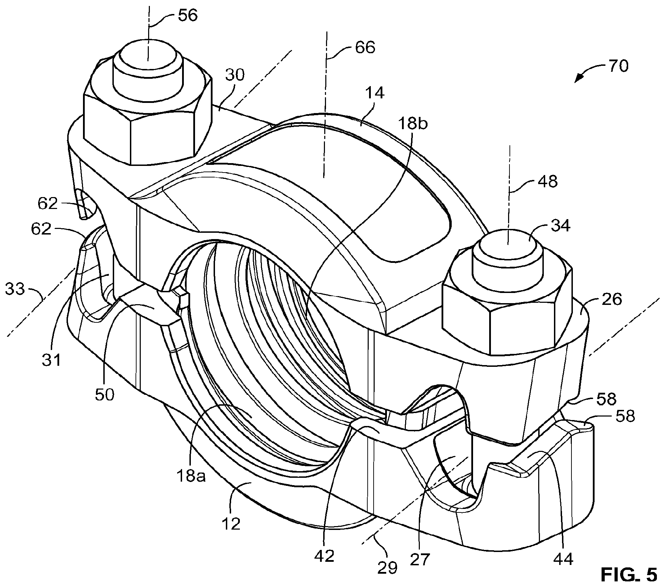

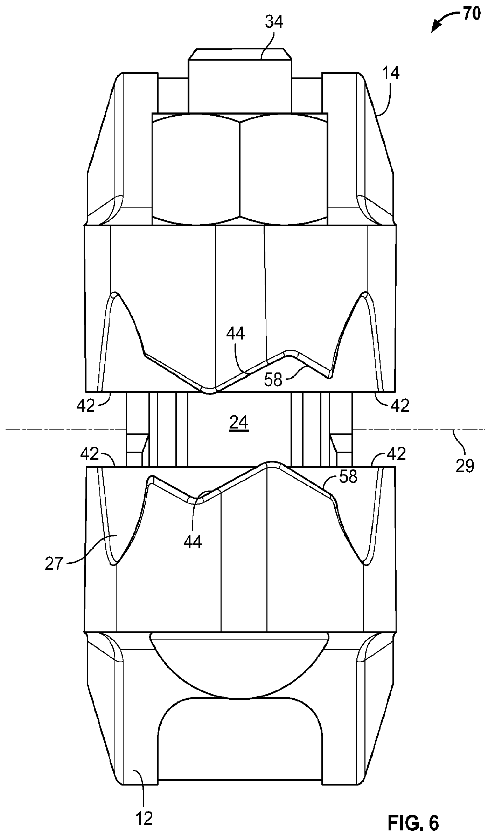

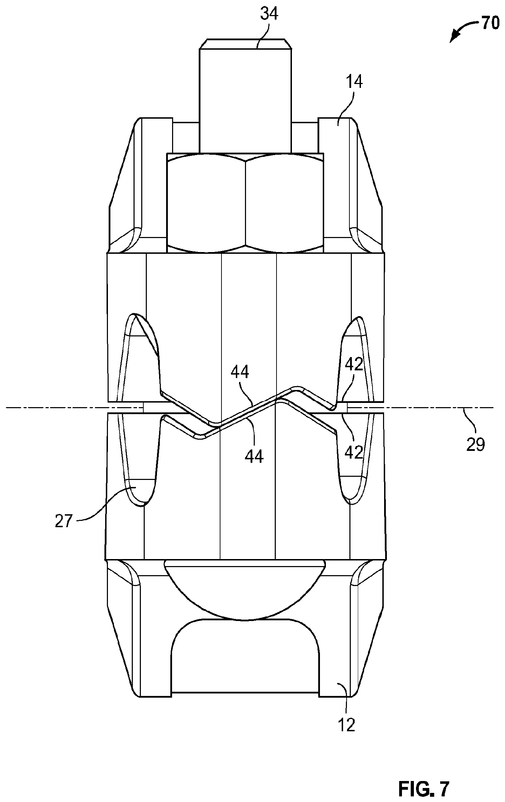

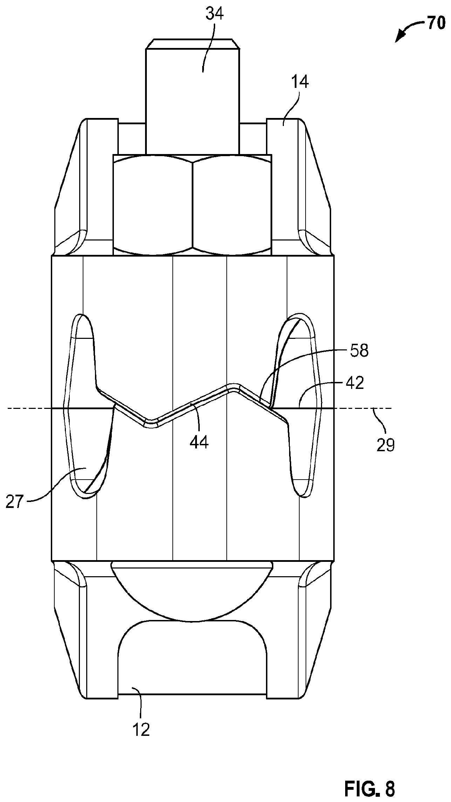

Figures 5-8 illustrate another example embodiment of a coupling 70, which is not part of the claimed invention. Coupling 70 is identical to coupling 10 as described above except for the orientation of the action surfaces 42 and 50. In coupling 70, the first action surface 42 is oriented substantially perpendicularly to the longitudinal axis 48 of the first fastener 34 and the second action surface 50 is oriented substantially perpendicularly to the longitudinal axis 56 of said second fastener 36. Due to the different orientation of the action surfaces 42 and 50 the coupling segments 12 and 14 do not rotate about axis 66 upon their engagement when the fasteners 34 and 36 are tightened to bring the segments toward one another to couple pipe elements to one another. Coupling 70 is advantageous when a more flexible pipe joint is desired. However, when the fasteners 34 and 36 are tightened, friction between the torqued fastener and its respective lug tends to rotate the coupling segments relatively to one another, thereby causing unwanted engagement between the projections 18a and 18b and the grooves in the pipe elements. As shown in Figures 7 and 8, this unwanted effect is mitigated by engagement between one or both of the stop surfaces 58 and 62 on the lugs 26 and 30 because the geometry of the support surfaces 44 and 52, and the stop surfaces 58 and 62, their lengths, positions on the segments and orientation angles are coordinated with the arcuate projections 18a and 18b such that the projections will not lock up within the circumferential grooves of the pipe elements when the first stop surfaces 58 and the second stop surfaces 62 respectively engage. Engagement between the stop surfaces and support surfaces may also serve as final visual confirmation that the coupling 70 has been properly installed.

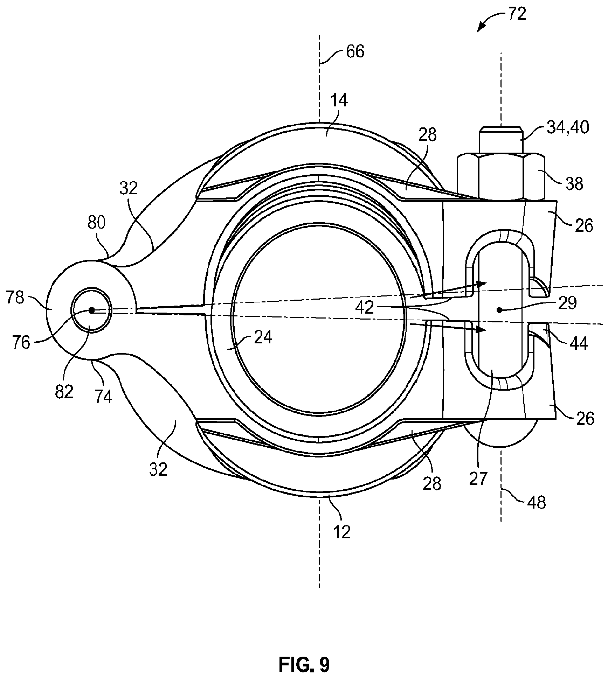

Figure 9 illustrates another example embodiment of a coupling 72, which is not part of the claimed invention. Coupling 72 shares many of the features of coupling embodiments 10 and 70 as described above but substitutes a hinge in place of the second lugs 30. The second ends 32 of each segment 12 and 14, arranged opposite to the first ends 28, are connected to a hinge 74 joining the first and second segments to one another. The hinge 74 defines a hinge axis 76 oriented perpendicularly to the longitudinal axis 48 of the first fastener 34. The first and second segments 12 and 14 are pivotable about the hinge axis 76. Adjusting the first fastener 34 pivots and thereby draws the first and second segments 12 and 14 toward one another, and engagement between the first stop surfaces 58 on the first lugs 26 (see Figure 8) arrests rotation of the segments relatively to one another about the axis 66. In this example embodiment, hinge 74 comprises bearings 78 (shown) and 80 (hidden) rotatably joined by a hinge pin 82. Other forms of hinged joints are also practical.

As for coupling 70, the first action surfaces 42 of coupling 74 are oriented substantially perpendicularly to the longitudinal axis 48 of the first fastener 34. Due to the perpendicular orientation of the action surfaces 42, the coupling segments 12 and 14 do not rotate relatively to one another about axis 66 upon their engagement when the fastener 34 is tightened to bring the segments toward one another to couple pipe elements to one another. Like coupling 70, coupling 74 is advantageous when a more flexible pipe joint is desired. When the fastener 34 is tightened, friction between the torqued fastener and its respective lug tends to rotate the coupling segments relatively to one another, thereby causing unwanted engagement between the projections 18a and 18b and the grooves in the pipe elements. Similar to coupling 70 and shown in Figures 7 and 8 (which also illustrate lugs 26 of coupling 74), this unwanted effect is mitigated by engagement between one or both of the stop surfaces 58 on the lugs 26 because the geometry of the support surfaces 44 and the stop surfaces 58, their lengths, positions on the segments and orientation angles are coordinated with the arcuate projections 18a and 18b such that the projections will not lock up within the circumferential grooves of the pipe elements when the first stop surfaces 58 engage. Engagement of the stop surfaces also prevents unwanted torsion loads on the hinge about an axis perpendicular to rotation axis 76. Engagement between the stop surfaces and support surfaces may also serve as final visual confirmation that the coupling 74 has been properly installed. The stop surfaces provide this confirmation over the entire tolerance range imposed on the diameter of the circumferential grooves in the pipe elements.

As with couplings 10 and 70, the first lugs 26 of coupling 74 define a first opening 27 surrounding a first axis 29 oriented perpendicularly to the longitudinal axis 48 of the first fastener 34. Axis 48 and fastener 34 are positioned between the first action surfaces 42 and the first support surfaces 44. In the example embodiment shown the first opening 27 extends through said first lugs 26. In a practical embodiment, the first adjustable fastener 34 may comprise a nut 38 and bolt 40.

It is expected that couplings according to the invention will permit both rigid and flexible joints to be formed easily and reliably while reducing the coupling's sensitivity to poor installation techniques.

## Claims

1. A method of installing a coupling (10) for joining pipe elements in end to end relation, said coupling comprising:
first and second segments (12, 14) attached to one another end to end surrounding a central space (16) for receiving said pipe elements, each said segment (12, 14) comprising a first lug (26) extending from a first end (28) thereof and a second lug (30) extending from a second end (32) thereof, said first and second lugs (26, 30) of said first segment (12) aligning respectively with said first and second lugs (26, 30) of said second segment (14);
a first adjustable fastener (34) extending between said first lugs (26) and a second adjustable fastener (36) extending between said second lugs (30); wherein
each said segment (12, 14) further comprises:
a first action surface (42) positioned between said central space (16) and said first lug (26), and a first support surface (44) positioned on said first lug (26), said first fastener (34) being positioned between said first action surface (42) and said first support surface (44), said first action surface (42) and said first support surface (44) being oriented at a first angle (46) transverse to a longitudinal axis (48) of said first fastener (34);
a second action surface (50) positioned between said central space (16) and said second lug (30), and a second support surface (52) positioned on said second lug (30), said second fastener (36) being positioned between said second action surface (50) and said second support surface (52), said second action surface (50) and said second support surface (52) being oriented at a second angle (54) transverse to a longitudinal axis (56) of said second fastener (36), said second angle (54) having an opposite slope from said first angle (46);
a first stop surface (58) positioned on said first lug (26) adjacent to said first support surface (44), said first stop surface (58) being oriented at a third angle (60) having a slope opposite to said first angle (46);
a second stop surface (62) positioned on said second lug (30) adjacent to said second support surface (52), said second stop surface (62) being oriented at a fourth angle (64) having a slope opposite to said second angle (54);
said method comprising:
tightening said first adjustable fastener (34) until said first stop surfaces (58) contact one another; and thereafter
tightening said second adjustable fastener (36) until said second stop surfaces (62) contact one another.

2. The method according to claim 1, further comprising:
tightening said first adjustable fastener (34) such that said first action surfaces (42) contact one another before said first stop surfaces (58) contact one another; and thereafter
continue tightening said first adjustable fastener (34) such that said first support surfaces (44) contact one another before said first stop surfaces (58) contact one another; and thereafter
continue tightening said first adjustable fastener (34) until said first stop surfaces (58) contact one another; and thereafter
tightening said second adjustable fastener (36) such that said second action surfaces (50) contact one another before said second stop surfaces (62) contact one another; and thereafter
continue tightening said second adjustable fastener (36) such that said second support surfaces (52) contact one another before said second stop surfaces (62) contact one another; and thereafter
continue tightening said second adjustable fastener (36) until said second stop surfaces (62) contact one another.

3. The method according to claim 1, wherein each of said first and second adjustable fasteners (34, 36) comprises a nut and bolt, said tightening steps comprising applying torque to one of said nut or said bolt.

4. The method according to claim 1, wherein each of said segments (12, 14) comprises first and second arcuate projections (18a, 18b) positioned on opposite sides of said segments (12, 14), each of said arcuate projections (18a, 18b) facing said central space (16), each of said arcuate projections (18a, 18b) being engageable within circumferential grooves in said pipe elements when said segments (12, 14) are drawn toward one another by said adjustable fasteners (34, 36).

5. The method according to claim 1, further comprising positioning a seal (24) within said central space (16), said seal (24) supporting said segments (12, 14) in spaced apart relation sufficient to permit insertion of said pipe elements into said central space (16) without disassembling said coupling before said tightening steps.

## Patentansprüche

1. Verfahren zum Einbauen einer Kupplung (10) zum Verbinden von Rohrelementen in einer Stoßverbindungsbeziehung, wobei die Kupplung umfasst:
ein erstes und ein zweites Segment (12, 14), die Ende an Ende aneinander befestigt sind und einen mittleren Raum (16) zur Aufnahme der Rohrelemente umgeben, wobei jedes Segment (12, 14) einen ersten Ansatz (26), der sich von einem ersten Ende (28) desselben erstreckt, und einen zweiten Ansatz (30), der sich von einem zweiten Ende (32) desselben erstreckt, umfasst, wobei der erste und der zweite Ansatz (26, 30) des ersten Segments (12) mit dem ersten beziehungsweise dem zweiten Ansatz (26, 30) des zweiten Segments (14) ausgerichtet sind;
ein erstes einstellbares Befestigungselement (34), das sich zwischen den ersten Ansätzen (26) erstreckt, und ein zweites einstellbares Befestigungselement (36), das sich zwischen den zweiten Ansätzen (30) erstreckt; wobei
jedes Segment (12, 14) ferner umfasst:
eine erste Angriffsfläche (42), die zwischen dem mittleren Raum (16) und dem ersten Ansatz (26) positioniert ist, und eine erste Auflagefläche (44), die auf dem ersten Ansatz (26) positioniert ist, wobei das erste Befestigungselement (34) zwischen der ersten Angriffsfläche (42) und der ersten Auflagefläche (44) positioniert ist, wobei die erste Angriffsfläche (42) und die erste Auflagefläche (44) in einem ersten Winkel (46) quer zu einer Längsachse (48) des ersten Befestigungselements (34) ausgerichtet sind;
eine zweite Angriffsfläche (50), die zwischen dem mittleren Raum (16) und dem zweiten Ansatz (30) positioniert ist, und eine zweite Auflagefläche (52), die auf dem zweiten Ansatz (30) positioniert ist, wobei das zweite Befestigungselement (36) zwischen der zweiten Angriffsfläche (50) und der zweiten Auflagefläche (52) positioniert ist, wobei die zweite Angriffsfläche (50) und die zweite Auflagefläche (52) in einem zweiten Winkel (54) quer zu einer Längsachse (56) des zweiten Befestigungselements (36) ausgerichtet sind, wobei der zweite Winkel (54) eine Steigung hat, die der des ersten Winkels (46) entgegengesetzt ist;
eine erste Anschlagfläche (58), die auf dem ersten Ansatz (26) angrenzend an die erste Auflagefläche (44) positioniert ist, wobei die erste Anschlagfläche (58) in einem dritten Winkel (60) mit einer Steigung ausgerichtet ist, die der des ersten Winkels (46) entgegengesetzt ist;
eine zweite Anschlagfläche (62), die auf dem zweiten Ansatz (30) angrenzend an die zweite Auflagefläche (52) positioniert ist, wobei die zweite Anschlagfläche (62) in einem vierten Winkel (64) mit einer Steigung ausgerichtet ist, die der des zweiten Winkels (54) entgegengesetzt ist;
wobei das Verfahren umfasst:
Festziehen des ersten einstellbaren Befestigungselements (34), bis die ersten Anschlagflächen (58) einander berühren; und danach
Festziehen des zweiten einstellbaren Befestigungselements (36), bis die zweiten Anschlagflächen (62) einander berühren.

2. Verfahren nach Anspruch 1, ferner umfassend:
Festziehen des ersten einstellbaren Befestigungselements (34) derart, dass die ersten Angriffsflächen (42) einander berühren, bevor die ersten Anschlagflächen (58) einander berühren; und danach
weiteres Festziehen des ersten einstellbaren Befestigungselements (34) derart, dass die ersten Auflageflächen (44) einander berühren, bevor die ersten Anschlagflächen (58) einander berühren; und danach
weiteres Festziehen des ersten einstellbaren Befestigungselements (34), bis die ersten Anschlagflächen (58) einander berühren; und danach
Festziehen des zweiten einstellbaren Befestigungselements (36) derart, dass die zweiten Angriffsflächen (50) einander berühren, bevor die zweiten Anschlagflächen (62) einander berühren; und danach
weiteres Festziehen des zweiten einstellbaren Befestigungselements (36) derart, dass die zweiten Auflageflächen (52) einander berühren, bevor die zweiten Anschlagflächen (62) einander berühren; und danach
weiteres Festziehen des zweiten einstellbaren Befestigungselements (36), bis die zweiten Anschlagflächen (62) einander berühren.

3. Verfahren nach Anspruch 1, wobei jedes von dem ersten und dem zweiten einstellbaren Befestigungselement (34, 36) eine Mutter und eine Schraube umfasst, wobei die Festziehschritte das Aufbringen eines Drehmoments auf eine von der Mutter und der Schraube umfasst.

4. Verfahren nach Anspruch 1, wobei jedes der Segmente (12, 14) einen ersten und einen zweiten bogenförmigen Überstand (18a, 18b) umfasst, die auf entgegengesetzten Seiten der Segmente (12, 14) positioniert sind, wobei jeder der bogenförmigen Überstände (18a, 18b) zum mittleren Raum (16) hin gerichtet ist, wobei jeder der bogenförmigen Überstände (18a, 18b) mit Umfangsnuten in den Rohrelementen in Eingriff gebracht werden kann, wenn die Segmente (12, 14) von den einstellbaren Befestigungselementen (34, 36) aufeinander zu gezogen werden.

5. Verfahren nach Anspruch 1, ferner umfassend eine Dichtung (24) innerhalb des mittleren Raums (16), wobei die Dichtung (24) die Segmente (12, 14) in einer Abstandsbeziehung stützt, die ausreicht, um das Einführen der Rohrelemente in den mittleren Raum (16) vor den Festziehschritten zu ermöglichen, ohne die Kupplung auseinanderzunehmen.

## Revendications

1. Procédé d'installation d'un raccord (10) destiné à assembler des éléments de tuyau selon une relation bout à bout, ledit raccord comprenant :
des premier et deuxième segments (12, 14) fixés l'un à l'autre bout à bout, entourant un espace central (16) destiné à recevoir lesdits éléments de tuyau, chacun desdits segments (12, 14) comprenant une première patte (26) s'étendant à partir d'une première extrémité (28) correspondante et une deuxième patte (30) s'étendant à partir d'une deuxième extrémité (32) correspondante, lesdites première et deuxième pattes (26, 30) dudit premier segment (12) s'alignant respectivement sur lesdites première et deuxième pattes (26, 30) dudit deuxième segment (14) ;
un premier élément de fixation (34) ajustable s'étendant entre lesdites premières pattes (26) et un deuxième élément de fixation (36) ajustable s'étendant entre lesdites deuxièmes pattes (30) ; dans lequel
chaque dit segment (12, 14) comprend en outre :
une première surface d'action (42) positionnée entre ledit espace central (16) et ladite première patte (26), et une première surface support (44) positionnée sur ladite première patte (26), ledit premier élément de fixation (34) étant positionné entre ladite première surface d'action (42) et ladite première surface support (44), ladite première surface d'action (42) et ladite première surface support (44) étant orientées selon un premier angle (46) transversal par rapport à un axe longitudinal (48) dudit premier élément de fixation (34) ;
une deuxième surface d'action (50) positionnée entre ledit espace central (16) et ladite deuxième patte (30), et une deuxième surface support (52) positionnée sur ladite deuxième patte (30), ledit deuxième élément de fixation (36) étant positionné entre ladite deuxième surface d'action (50) et ladite deuxième surface support (52), ladite deuxième surface d'action (50) et ladite deuxième surface support (52) étant orientées selon un deuxième angle (54) transversal par rapport à un axe longitudinal (56) dudit deuxième élément de fixation (36), ledit deuxième angle (54) ayant une pente opposée par rapport à celle dudit premier angle (46) ;
une première surface de butée (58) positionnée sur ladite première patte (26) de manière adjacente à ladite première surface support (44), ladite première surface de butée (58) étant orientée selon un troisième angle (60) ayant une pente opposée par rapport à celle dudit premier angle (46) ;
une deuxième surface de butée (62) positionnée sur ladite deuxième patte (30) de manière adjacente à ladite deuxième surface support (52), ladite deuxième surface de butée (62) étant orientée selon un quatrième angle (64) ayant une pente opposée par rapport à celle dudit deuxième angle (54) ;
ledit procédé comprenant :
le serrage dudit premier élément de fixation (34) ajustable jusqu'à mise en contact desdites premières surfaces de butée (58) l'une avec l'autre ; puis
le serrage dudit deuxième élément de fixation (36) ajustable jusqu'à mise en contact desdites deuxièmes surfaces de butée (62) l'une avec l'autre.

2. Procédé selon la revendication 1, comprenant en outre :
le serrage dudit premier élément de fixation (34) ajustable de sorte à mettre en contact lesdites premières surfaces d'action (42) l'une avec l'autre avant la mise en contact desdites premières surfaces de butée (58) l'une avec l'autre ; puis
la poursuite du serrage dudit premier élément de fixation (34) ajustable de sorte à mettre en contact lesdites premières surfaces support (44) l'une avec l'autre, avant la mise en contact desdites premières surfaces de butée (58) l'une avec l'autre ; puis
la poursuite du serrage dudit premier élément de fixation (34) ajustable jusqu'à la mise en contact desdites premières surfaces de butée (58) l'une avec l'autre ; puis
le serrage dudit deuxième élément de fixation (36) ajustable de sorte à mettre en contact lesdites deuxièmes surfaces d'action (50) l'une avec l'autre, avant la mise en contact desdites deuxièmes surfaces de butée (62) l'une avec l'autre ; puis
la poursuite du serrage dudit deuxième élément de fixation (36) ajustable de sorte à mettre en contact lesdites deuxièmes surfaces support (52) l'une avec l'autre avant la mise en contact desdites deuxièmes surfaces de butée (62) l'une avec l'autre ; puis
la poursuite du serrage dudit deuxième élément de fixation (36) ajustable jusqu'à la mise en contact desdites deuxièmes surfaces de butée (62) l'une avec l'autre.

3. Procédé selon la revendication 1, dans lequel chacun desdits premier et deuxième éléments de fixation (34, 36) ajustables comprend un écrou et un boulon, lesdites étapes de serrage comprenant l'application d'un couple à l'un dudit écrou ou dudit boulon.

4. Procédé selon la revendication 1, dans lequel chacun desdits segments (12, 14) comprend des première et deuxième saillies arquées (18a, 18b) positionnées sur des côtés opposés desdits segments (12, 14), chacune desdites saillies arquées (18a, 18b) faisant face audit espace central (16), chacune desdites saillies arquées (18a, 18b) pouvant venir en prise dans des rainures circonférentielles dans lesdits éléments de tuyau lorsque lesdits segments (12, 14) sont tirés l'un vers l'autre par lesdits éléments de fixation (34, 36) ajustables.

5. Procédé selon la revendication 1, comprenant en outre le positionnement d'un joint d'étanchéité (24) à l'intérieur dudit espace central (16), ledit joint d'étanchéité (24) supportant lesdits segments (12, 14) dans une relation écartée suffisante pour permettre l'insertion desdits éléments de tuyau dans ledit espace central (16) sans démonter ledit raccord avant lesdites étapes de serrage.
